# EUROPEAN PATENT APPLICATION

(11) **EP 4 597 610 A1**
(43) Date of publication of application: **06.08.2025**
(21) Application number: 24221346.0
(22) Date of filing: 19.12.2024
(51) Int. Cl.: H01M 4/131, H01M 4/505, H01M 4/525, H01M 4/02

(54) **ENERGY STORAGE APPARATUS, METHOD FOR DETERMINING UNIFORM LITHIUM REPLENISHMENT, AND ELECTRICAL DEVICE**

(30) Priority: 02.02.2024 CN 202410149532
(71) Applicant: Hithium Tech HK Limited, Hong Kong (HK)
(72) Inventor: ZHENG, Jianming, Shenzhen, 518000 (CN); HE, Wei, Shenzhen, 518000 (CN)
(74) Representative: RGTH

(57) **Abstract**

The energy storage apparatus includes: an electrode assembly, including a positive electrode sheet, a negative electrode sheet and a separator. An active material layer of the positive electrode sheet includes a first lithium-containing compound and a second lithium-containing compound. The second lithium-containing compound is lithium-replenishing particles. The lithium-replenishing particle includes a lithium-replenishing core and a shell. A connection area and a separation area are formed between the lithium-replenishing core and the shell. A standard deviation of path length ratios of D lithium-replenishing particles is less than or equal to 0.18. The path length ratio of the lithium-replenishing particle refers to a ratio of a path length of the shell of the lithium-replenishing particle in the connection area to a total circumference of the shell in a cross section of the positive electrode sheet.

## Description

### TECHNICAL FIELD

The present application relates to the technical field of energy storage, and in particular, to an energy storage apparatus, a method for determining uniform lithium replenishment, and an electrical device.

### BACKGROUND

Secondary batteries, also known as rechargeable batteries or storage batteries, refer to batteries that can continue to be used by activating the active materials through charging after the batteries are discharged. The secondary batteries gradually become the main power source of electrical devices due to their recyclable characteristics. With the gradual increase in the demand for secondary batteries, there is also an increasingly demand for performance in various aspects of the secondary batteries, especially for the demand of the battery cycle life.

### SUMMARY

The present application adopts the following technical solutions.

According to an aspect of the present application, an energy storage apparatus is provided. The apparatus comprises: an electrode assembly, comprising a positive electrode sheet, a negative electrode sheet and a separator arranged in a stacked manner. The positive electrode sheet comprises a current collector and an active material layer located on a surface of the current collector. The active material layer comprises a first lithium-containing compound and a second lithium-containing compound in granular form. The first lithium-containing compound is a positive electrode active material, and the second lithium-containing compound is lithium-replenishing particles. The lithium-replenishing particle comprises a lithium-replenishing core and a shell covering the lithium-replenishing core. A connection area and a separation area are formed between the lithium-replenishing core and the shell. A distance between the lithium-replenishing core and the shell in the connection area is less than or equal to 5 nanometers. A distance between the lithium-replenishing core and the shell in the separation area is greater than 5 nanometers. A standard deviation of path length ratios of D lithium-replenishing particles is less than or equal to 0.18. The D is a number of the lithium-replenishing particle is an integer greater than or equal to 6. The path length ratio of the lithium-replenishing particle refers to a ratio of a path length of the shell of the lithium replenishing particle in the connection area to a total circumference of the shell in a cross section of the positive electrode sheet.

According to an aspect of the present application, a method for determining uniform lithium replenishment is provided. The method comprises:
step 1: disassembling an energy storage apparatus after formation to obtain a positive electrode sheet, where the positive electrode sheet comprises an active material layer, the active material layer comprises a second lithium-containing compound, the second lithium-containing compound is lithium-replenishing particles, and the lithium-replenishing particle comprises a lithium-replenishing core and a shell covering the lithium-replenishing core;
step 2: cutting the positive electrode sheet, and obtaining an electron micrograph corresponding to at least one observation area in a cross section of the positive electrode sheet, respectively;
step 3: determining a connection area and a separation area of each of D lithium-replenishing particles in at least one electron micrograph, where D is a number of the lithium-replenishing particle and is an integer greater than or equal to 6, a distance between the lithium-replenishing core and the shell in the connection area is less than or equal to 5 nanometers, and a distance between the lithium-replenishing core and the shell in the separation area is greater than 5 nanometers;
step 4: determining a ratio of a path length of the shell of each lithium-replenishing particle in the connection area to a total circumference of the shell, to obtain a path length ratio of each lithium-replenishing particle in the D lithium-replenishing particles;
step 5: determining a standard deviation of the path length ratios of the D lithium-replenishing particles according to D path length ratios; and
step 6: when the standard deviation of the path length ratios of the D lithium-replenishing particles is less than or equal to 0.18, determining that the energy storage apparatus is replenished with lithium uniformly.

According to an aspect of the present application, an electrical device is provided. The electrical device comprises the energy storage apparatus as described in the above aspect, and the energy storage apparatus supplies power to the electrical device.

It may be understood that the foregoing general description and the following detailed description are exemplary and explanatory only, and do not limit the present application.

### BRIEF DESCRIPTION OF THE DRAWINGS

The foregoing and other features and advantages of the present application will become more apparent by describing in detail the exemplary embodiments thereof with reference to the accompanying drawings.
FIG. 1 is a schematic structural diagram of a household energy storage system illustrated according to an exemplary embodiment.
FIG. 2 is a schematic diagram of a cross-sectional structure of an electrode assembly illustrated according to an exemplary embodiment.
FIG. 3 is a schematic diagram of a cross-sectional structure of an energy storage apparatus illustrated according to an exemplary embodiment.
FIG. 4 is a schematic diagram of a cross-sectional structure of a positive electrode sheet illustrated according to an exemplary embodiment.
FIG. 5 is an electron micrograph of a first observation area within the cross section of the positive electrode sheet illustrated according to an exemplary embodiment.
FIG. 6 is a schematic structural diagram of an electrical device illustrated according to an exemplary embodiment.

Description of reference numerals is as follows:
100, Energy storage apparatus; 200, Electrical energy conversion apparatus; 300, User load; 400, Electrical device;
10, Housing; 20, Electrode assembly; 30, Terminal cap unit;
11, Accommodating cavity;
21, Positive electrode sheet; 22, Negative electrode sheet; 23, Separator; 31, Cover plate; 32, Electrode terminal;
211, Current collector; 212, Active material layer;
Li1, First lithium-containing compound; Li2, Second lithium-containing compound;
Li21, Lithium-replenishing core; Li22, Shell;
AA, Connection area; BB, Separation area.

### DETAILED DESCRIPTION

Exemplary embodiments will now be described more fully with reference to the accompanying drawings. However, the exemplary embodiments can be embodied in various forms and may not be construed as limited to the examples set forth herein. On the contrary, these embodiments are provided so that the present application will be more thorough and complete, and will fully convey the concepts of exemplary embodiments to those skilled in the art. In the drawings, the same reference numeral indicates the same or similar part, and repeated descriptions thereof will be omitted.

Since the energy required by people is highly temporal and spatial, in order to rationally utilize energy and improve utilization rate of the energy, it is necessary to use a medium or device to store one form of energy in the same energy form or in another converted form of energy, and then release it in a specific form of energy based on future application needs.

The current green energy mainly comprises solar energy, wind energy, etc. However, solar energy and wind energy generally have problems of strong intermittency and high volatility, which will cause unstable voltage of the green power grid (not enough electricity during peak hours and too much electricity during valley hours). Unstable voltage will cause damage to electricity. Therefore, it may cause the problem of "abandonment of wind and solar power" due to insufficient demand for electricity or insufficient grid acceptance capacity.

To solve the problem of insufficient demand for electricity or insufficient grid acceptance capacity, it is necessary to rely on energy storage apparatuses. That is, the electrical energy is converted into other forms of energy through physical or chemical means and stored by the energy storage apparatus, and the energy stored in the energy storage apparatus is then converted into electrical energy when needed. In short, the energy storage apparatus is similar to a large "power bank", which stores electrical energy when there is sufficient light energy and wind energy, and releases the stored electrical energy when needed.

The current energy storage has a wide range of application scenarios, comprising aspects of power generation side energy storage, grid side energy storage, renewable energy grid-connected energy storage and user side energy storage, etc. The corresponding types of energy storage apparatuses comprise:
(1) large container-type energy storage devices applied in grid-side energy storage scenarios, which may serve as high quality active and reactive power regulating power sources in the grid, achieve load matching of electrical energy in time and space, enhance the capacity of renewable energy consumption, and are of great significance in grid system backup, relieving the pressure of power supply to peak loads, and regulating the peak and frequency;
(2) small and medium-sized energy storage cabinets applied in commercial and industrial energy storage scenarios (banks, shopping malls, etc.) on the user side and small household energy storage boxes used in household energy storage scenarios on the user side, with the main mode of operation being "peak shaving and valley filling". Since there is a large price difference in electricity charges at peak and valley locations according to electricity demand, users with energy storage apparatuses, in order to reduce costs, usually charge the energy storage cabinets/boxes during periods of low electricity prices, and then release the electricity in the energy storage apparatuses for use during periods of peak electricity prices to achieve the purpose of saving electricity charges. In addition, in remote regions, as well as regions with high incidence of natural disasters such as earthquakes, hurricanes, etc., the existence of household energy storage apparatuses is equivalent to the users providing backup power sources for themselves and the grid, thereby eliminating the inconvenience caused by frequent power cuts due to disasters or other reasons.

In the related art, in order to improve the cycle life of secondary batteries, it is proposed to pre-replenish lithium during the manufacturing process of secondary batteries to reduce the lithium consumption caused by the secondary batteries in the formation stage. However, after careful research, technicians found that after lithium replenishment, there are still local areas where the lithium replenishment effect is poor and appear purple, and lithium precipitation occurs in some areas due to excessive lithium replenishment, which affects the cycle life of the secondary batteries and even increases potential safety hazards.

A main purpose of the present application is to provide an energy storage apparatus, a method for determining uniform lithium replenishment, and an electrical device, which can improve the cycle life.

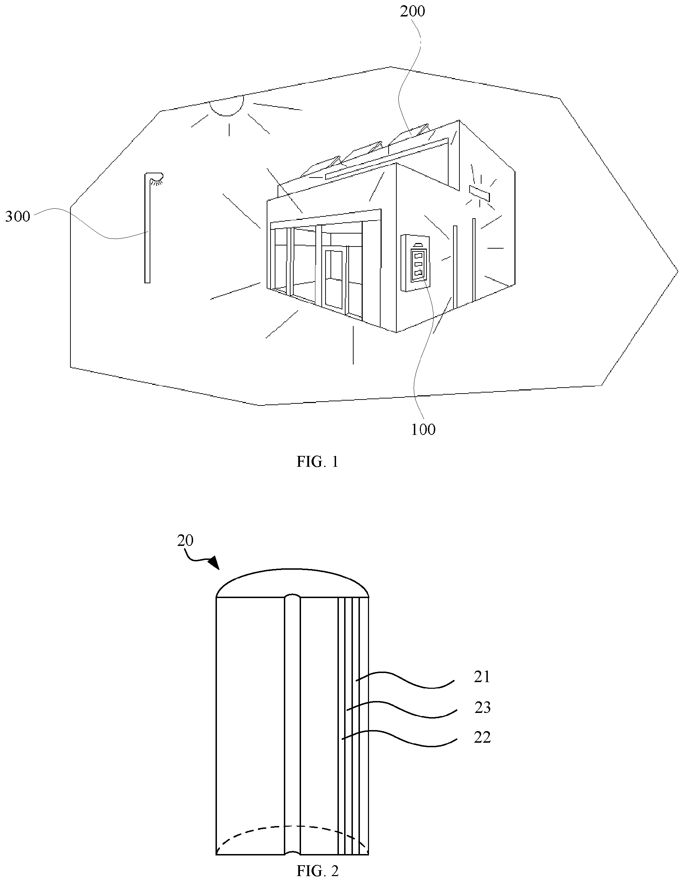

Taking the household energy storage scenario of the user-side energy storage as an example, FIG. 1 shows a household energy storage system. The household energy storage system comprises an energy storage apparatus 100 and an electrical energy conversion apparatus 200 (such as a photovoltaic panel), and a user load 300 (such as a street light, household appliances, etc.). The energy storage apparatus 100 is a small energy storage box that may be mounted on an outdoor wall through a wall-mounted manner. For example, the electrical energy conversion apparatus 200 may convert solar energy into electrical energy during the periods of low electricity prices, and store the electrical energy via the energy storage apparatus 100, which is then supplied to the user load 300 for use during the periods of peak electricity prices, or supplied to the user load 300 for use when the grid power cuts/outages.

In combination with the above-mentioned situation of storing energy by physical or electrochemical means, taking electrochemical energy storage as an example, the energy storage apparatus 100 comprises at least one chemical battery. The chemical element in the chemical battery is utilized as the energy storage medium, so as to realize the charging and discharging process through the chemical reaction or change of the energy storage medium. In short, the electrical energy generated by light energy and wind energy is stored in at least one group of chemical batteries through the chemical reaction or change of the energy storage medium, and when the use of external electrical energy reaches a peak, the electrical energy stored in the at least one group of chemical batteries is released for use or transferred to a place where the electrical energy is scarce for use through the chemical reaction or change of the energy storage medium.

An embodiment of the present application provides an energy storage apparatus 100. The energy storage apparatus 100 may be, but is not limited to, a single cell (secondary battery), and a battery module, a battery pack, a battery system, etc. composed of single cells. For a single cell, it may be a lithium-ion battery, a lithium-sulfur battery, a sodium-lithium-ion battery, a sodium-ion battery, a magnesium-ion battery, etc. The single cell may be cylindrical, flat, rectangular, etc. In addition, the single cell may also be a soft-packed battery, a battery with a housing, etc., which is not limited by the embodiments of the present application.

Taking the energy storage apparatus 100 as a single cell as an example, the energy storage apparatus 100 comprises an electrode assembly 20. As shown in FIG. 2, the electrode assembly 20 comprises a positive electrode sheet 21, a negative electrode sheet 22 and a separator 23 arranged in a stacked manner, and the separator 23 is located between the positive electrode sheet 21 and the negative electrode sheet 22. The positive electrode sheet 21 and the negative electrode sheet 22 have a positive tab and a negative tab respectively, so as to facilitate series connection, parallel connection, or series connection and parallel connection with other single cell(s) through the positive tab and the negative tab.

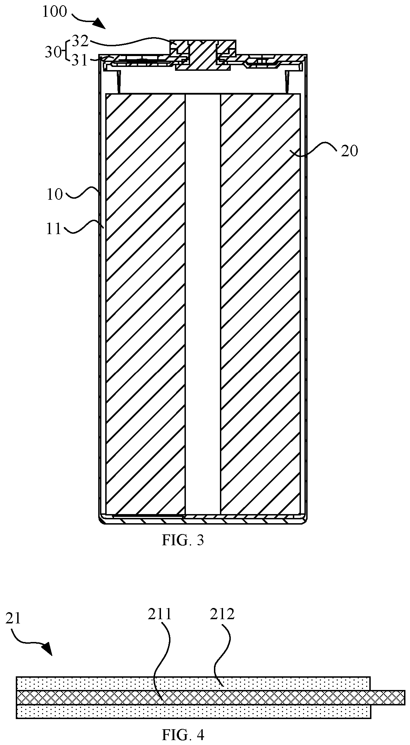

FIG. 3 illustrates a schematic structural diagram of the energy storage apparatus 100 provided in an embodiment of the present application. As shown in FIG. 3, in addition to the electrode assembly 20, the energy storage apparatus 100 further comprises a housing 10 and a terminal cap unit 30. The housing 10 comprises an accommodating cavity 11 with an opening, the terminal cap unit 30 seals the opening of the accommodating cavity 11, and the electrode assembly 20 is accommodated in the accommodating cavity 11.

The housing 10 may be a cylindrical structure with an opening at one end. In this case, the energy storage apparatus 100 comprises one terminal cap unit 30 to seal the opening of the housing 10 through the terminal cap unit 30. The shell 10 may also be a cylindrical structure with openings at both ends. In this case, the energy storage apparatus 100 comprises one terminal cap unit 30 and one cover plate 31, or comprises two terminal cap units 30, to seal the two openings of the housing 10 respectively through one terminal cap unit 30 and one cover plate 31, or through two terminal cap units 30.

The terminal cap unit 30 comprises a terminal cap body and an electrode terminal 32. The electrode terminal 32 is penetrated on the terminal cap body, and has one end connected to the electrode assembly 20, and the other end exposed outside the accommodating cavity 11 to serve as the output terminal of the energy storage apparatus 100. The terminal cap body may also be provided with an explosion-proof valve, a liquid-filling hole, or an explosion-proof valve and a liquid-filling hole. The explosion-proof valve is used to externally vent the gas accumulated in the accommodating cavity 11 to improve the safety of the use of the energy storage apparatus 100. The liquid-filling hole is used to inject electrolyte into the accommodating cavity 11 to achieve infiltration of the electrode assembly 20.

In combination with the electrode assembly 20 described above, the positive tab and the negative tab respectively possessed by the positive electrode sheet 21 and the negative electrode sheet 22 may be located at different ends of the electrode assembly 20. In this case, one of the positive tab and the negative tab is connected to the electrode terminal 32 comprised in the terminal cap unit 30, and the other is connected to the bottom of the housing 10 or the electrode terminal 32 comprised in the other terminal cap unit 30, so as to realize the electrical energy output of the electrode assembly 20 through the electrode terminal 32 of the terminal cap unit 30 and the bottom of the housing 10, or through the electrode terminals 32 of the two terminal cap units 30.

Furthermore, the energy storage apparatus 100 further comprises a metal adapter. The metal adapter may be used to connect the tab of the electrode assembly 20 with the electrode terminal 32 of the terminal cap unit 30 to ensure the stability of the connection between the tab and the electrode terminal 32 while ensuring the overcurrent capacity.

In the related art, lithium-replenishing materials are usually added during the production process of the positive electrode sheet 21 to reduce the consumption of lithium ions in the positive electrode active material caused by the generation of a solid electrolyte interface film during the formation stage of the energy storage apparatus 100, thereby reducing the irreversible capacity of the energy storage apparatus 100 and facilitating the improvement of the cycle life of the energy storage apparatus 100. However, after careful research, the technicians found that although the lithium-replenishing particles comprised in the lithium-replenishing material can achieve the replenishment of lithium ions, after disassembling a used energy storage apparatus 100, it was found that some areas on the negative electrode sheet 22 of the electrode assembly 20 still had purple spots due to poor lithium replenishment effect, and lithium precipitation occurs at some areas due to excessive lithium replenishment. In this regard, the embodiment of the present application provides an energy storage apparatus 100. The lithium-replenishing material added to the positive electrode sheet 21 comprised in the energy storage apparatus 100 can effectively ensure the uniformity of lithium replenishment in various areas on the positive electrode sheet 21, so as to effectively improve the cycle life of the energy storage apparatus 100 and reduce safety hazards.

FIG. 4 illustrates a schematic diagram of a cross-sectional structure of a positive electrode sheet 21 provided in an embodiment of the present application. As shown in FIG. 4, the positive electrode sheet 21 comprises: a current collector 211 and an active material layer 212 located on a surface of the current collector 211.

For the positive electrode sheet 21, the surface of one side of the current collector 211 may be provided with the active material layer 212, or the surfaces of both sides of the current collector 211 may be provided with the active material layers 212. Compared with the case where the surface of one side of the current collector 211 is provided with the active material layer 212, the case where the surfaces of both sides of the current collector 211 are provided with the active material layers 212 can effectively increase the content of lithium ions per unit volume of the positive electrode sheet 21, so that for the energy storage apparatus 100 comprising the positive electrode sheet 21, the specific capacity can be effectively increased, and at the same time, since the amount of the current collector 211 is reduced, the lightweight of the energy storage apparatus 100 can be achieved.

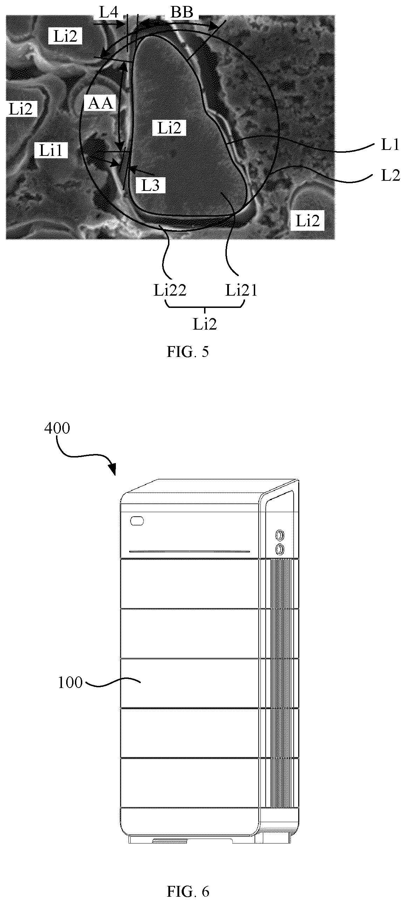

As shown in the electron micrograph of an observation area within the cross-section of the positive electrode sheet 21 in FIG. 5, it may be seen that the active material layer 212 comprises a first lithium-containing compound Li1 and a second lithium-containing compound Li2 in granular form. The first lithium-containing compound Li1 is a positive electrode active material, and the second lithium-containing compound Li2 is a lithium-replenishing particle. The lithium-replenishing particle comprises a lithium-replenishing core Li21 and a shell Li22 covering the lithium-replenishing core Li21, thereby realizing replenishment of lithium ions through the second lithium-containing compound Li2 comprised in the active material layer 212, and reducing the consumption of lithium ions in the positive electrode active material caused by the generation of the solid electrolyte interface film.

The electron micrographs shown in FIG. 5 are all images of regions observed through the microscope window at an acceleration voltage of 5 kV, a working distance of 4.3 mm, an aperture size of 30µm, and a magnification of 5,000 times.

The first lithium-containing compound Li1 may be a positive electrode active material, such as at least one of LiFePO₄, LiCoO₂, LiMn₂O₄, and NCM. In this way, the selection criteria for the first lithium-containing compound Li1 can be lowered and the production cost of the active material layer 212 can be reduced. At the same time, the electrical properties of the first lithium-containing compound Li1 can be improved by combining a plurality of types of positive electrode active materials.

With regard to the lithium-replenishing core Li21 comprised in the lithium-replenishing particles of the second lithium-containing compound Li2, it may be Li₁₊ᵣ M₁₋ₚ Nₚ O₄₋ₛBₛ, where 0.1<r<6.1, 0≤p<0.99, 0≤s<0.1, M and N each comprise at least one of elements Fe, Co, Ni, Ti, Zn, Mg, Al, Mn, V, Cr, Zr, Cu, Nb, Ta, W, Zr, Y, and La, and B comprises at least one of elements S, N, F, Cl, and Br. For example, the lithium-replenishing core Li21 is Li₅ FeO₄ (M is the element Fe, and both p and s take the value 0).

Since the lithium content of the second lithium-containing compound Li2 is greater than the lithium content of the first lithium-containing compound Li1, when preparing the active material layer 212, a certain amount of the second lithium-containing compound Li2 may be directly substituted for the same amount of the first lithium-containing compound Li1, so as to achieve the lithium replenishment effect while avoiding the adjustment of the contents of other component(s), thereby facilitating the simplification of the preparation of the active material layer 212. The lithium content involved in the present application is the content of lithium ions per unit mass, and the unit mass may be the mass of the substance or the amount of the substance (i.e., molar mass).

Optionally, in the cross section of the lithium-replenishing particle, the ratio of the total length of the outer contour of the lithium-replenishing core Li21 to the circumference of the smallest circumscribed circle of the outer contour is greater than or equal to 0.125 and less than or equal to 1. For example, the ratio of the circumference of the lithium-replenishing core Li21 to the circumference of the smallest circumscribed circle is 0.125, 0.25, 0.5, 1. In this way, the roundness of the lithium-replenishing core Li21 can be guaranteed, which in turn ensures the uniformity of the coating of the shell Li22 when preparing lithium-replenishing particles, and the deintercalation effect of lithium ions in the lithium-replenishing core Li21 can be guaranteed, while reducing the risk of the rupture of the shell Li22 caused by the lithium-replenishing core Li21 due to the deintercalation of lithium ions.

Furthermore, the ratio of the total length of the outer contour of the lithium-replenishing core Li21 to the circumference of the smallest circumscribed circle of the outer contour is greater than or equal to 0.16 and less than or equal to 0.9. In this way, the roundness of the lithium-replenishing core Li21 can be further ensured, so as to further ensure the deintercalation effect of lithium ions in the lithium-replenishing core Li21, and at the same time further reduce the risk of rupture of the shell Li22.

For the total length of the outer contour of the lithium-replenishing core Li21, and the circumference of the minimum circumscribed circle of the outer contour, In combination with the cross-sectional structure of the lithium-replenishing particle in FIG. 5 described above, the outer contour L1 of the lithium-replenishing core Li21 is marked and the length of each of multiple segments of the outer contour L1 is determined based on the established coordinate system to determine the total length of the outer contour L1; and the minimum circumscribed circle L2 of the outer contour L1 is determined based on the established coordinate system, and the circumference of the minimum circumscribed circle L2 is determined.

Optionally, the median particle size of the lithium-replenishing core Li21 is greater than or equal to 3 micrometers and less than or equal to 10 micrometers. In this way, the size of the lithium-replenishing particle is limited by limiting the median particle size of the lithium-replenishing core Li21, thereby ensuring the uniformity of the distribution of the lithium-replenishing particles in the active material layer 212. At the same time, it is avoided the occurrence of lithium precipitation due to a large lithium-ion content caused by the large median particle size. The median particle size of the lithium-replenishing core may also be slightly less than 3 micrometers, or slightly greater than 10 micrometers, which is not limited by the embodiments of the present application.

For the shell Li22 comprised in the lithium-replenishing particle of the second lithium-containing compound Li2, it may be a single coating layer structure or a multi-coating-layer structure. When the shell Li22 is a single coating layer structure, the shell Li22 may be an oxide coating layer or a conductive coating layer. When the outer shell Li22 is a multi-coating-layer structure, the shell Li22 may be an oxide coating layer and a conductive coating layer, and the oxide coating layer is located in the inner layer.

The oxide coating layer may be an MₓO_{y} coating layer, where M comprises at least one of elements Fe, Co, Ni, Ti, Zn, Mg, Al, Mn, V, Cr, Zr, Cu, Nb, Ta, W, Zr, Y, and La, and 1≤x<3, 1≤y≤5. The oxide (MₓO_{y}) coating layer may be provided to prevent external gas and the like from reacting with the lithium-replenishing core, thus preventing the deintercalation effect of the lithium ions from being affected. For example, it is an Al₂O₃ coating layer. The conductive coating layer may be a carbon coating layer or a superionic conductor coating layer, etc. For example, it may be a graphite coating layer.

The specific structure of the shell Li22 may be set in combination with the median particle size of the lithium-replenishing core Li21. For example, for the lithium-replenishing core Li21 with a large specific surface area, it is easier for external gases, moisture, etc. to enter the inner side of the lithium-replenishing core Li21, resulting in CO₂ and moisture reacting with the lithium-replenishing core Li21, leading to a decrease in the capacity of the lithium-replenishing core Li21, thereby resulting in a decrease in the amount of lithium replenishment. In this case, an oxide coating layer may be coated on the surface of the lithium-replenishing core Li21 to form protection, thereby ensuring the lithium replenishment effect. For the lithium-replenishing core Li21 with a small specific surface area, the conductivity thereof is weak. In this case, a conductive coating layer may be coated on the surface of the lithium-replenishing core Li21 to improve the conductive performance. For the lithium-replenishing core Li21 with a moderate specific surface area, the surface of the lithium-replenishing core Li21 may be sequentially coated with an oxide coating layer and a conductive coating layer, so as to improve the conductivity while forming protection.

For the specific surface area of the lithium-replenishing core Li21, the larger the particle size, the smaller the specific surface area, and the smaller the particle size, the larger the specific surface area. In this way, exemplarily, when the median particle size of the lithium-replenishing core Li21 is less than or equal to 10 micrometers, it may be provided with only an oxide coating layer. When the median particle size of the lithium-replenishing core Li21 is greater than or equal to 3 micrometers, it is provided with only a conductive coating layer. When the median particle size of the lithium-replenishing core Li21 is greater than or equal to 3 micrometers and less than or equal to 10 micrometers, an oxide coating layer and a conductive coating layer are provided at the same time. Alternatively, the oxide coating layer may also be provided when the median particle size of the lithium-replenishing core Li21 is greater than 10 micrometers, the conductive coating layer may be provided when the median particle size of the lithium-replenishing core Li21 is less than 3 micrometers, and the oxide coating layer and the conductive coating layer may both be provided when the median particle size of the lithium-replenishing core Li21 is less than 3 micrometers or greater than 10 micrometers, which is not limited by the embodiments of the present application.

Taking the shell Li22 comprising an oxide coating layer and a carbon coating layer as an example, the preparation method of the second lithium-containing compound Li2 may be: mixing the lithium source and the precursor Fe source in a molar ratio of 5~6:1, after ball milling, sintering at a high temperature of 600 to 800 degrees Celsius for 15~20 hours under a protective gas (such as nitrogen, etc.) to obtain a granular lithium-replenishing core Li21. Then, the lithium-replenishing core Li21 is first coated with a layer of oxide through technologies such as atomic layer deposition (ALD), chemical vapor deposition (CVD), pulsed laser deposition (PLD), etc., to obtain an oxide coating layer, and then mixed with an organic carbon source, and sintered at a high temperature of 300~500 degrees Celsius for 4~6 hours to obtain a second lithium-containing compound Li2 with the oxide coating layer and a carbon coating layer.

After sintering at high temperature to obtain the granular lithium-replenishing core Li21, ball milling and screening operations may be performed to obtain a particle with the ratio of the total length of the outer contour to the circumference of the smallest circumscribed circle of the outer contour within the cross section of the particle greater than or equal to 0.125 and less than or equal to 1 as the lithium-replenishing core Li21. At the same time, the lithium-replenishing core Li21 with the median particle size greater than or equal to 3 micrometers and less than or equal to 10 micrometers can also be obtained.

For the lithium-replenishing particle comprising the carbon coating layer, in combination with the above-mentioned method for preparing the second lithium-containing compound Li2, when the lithium-replenishing core Li21 is mixed with the organic carbon source, the ratio of the organic carbon source is adjusted so that the mass proportion of the carbon content in the prepared second lithium-containing compound Li2 is greater than or equal to 0.5% and less than or equal to 4%, so as to avoid affecting the conductive performance of the second lithium-containing compound Li2 in the active material layer 212 due to the low carbon content in the second lithium-containing compound Li2, and at the same time to avoid causing the carbon coating layer to be too thick due to the high content of carbon in the second lithium-containing compound Li2, which will affect the deintercalation of lithium ions on the lithium-replenishing core Li21. Exemplarily, the mass proportion of carbon in the second lithium-containing compound Li2 is 0.5%, 1%, 2%, or 4%.

In addition, for the shell Li22 (oxide coating layer, conductive coating layer, or oxide coating layer and conductive coating layer) coating the lithium-replenishing core Li21, in order to prevent the external air from entering the lithium-replenishing core Li21 and reacting due to rupture of the shell Li22, which leads to reduction of the deintercalation ability of lithium ions in the lithium-replenishing core Li21, the shell Li22 of the lithium-replenishing particle is a continuous spherical structure. That is, as shown in FIG. 5, in the electron micrograph within the cross section of the positive electrode sheet 21, the cut edge of the shell Li22 is a continuous structure. In this way, it can be ensured that the shell Li22 completely covers the lithium-replenishing core Li21, and the reaction between the lithium-replenishing core Li21 and the external air is avoided. Exemplarily, in combination with the above-mentioned method for producing the second lithium-containing compound Li2, the ratio of the precursor Fe source and the ratio of the organic carbon source may be adjusted to ensure that the shell Li22 of the lithium-replenishing particle is a continuous spherical structure.

It will be appreciated that the spherical structure described herein may be a regular spherical structure or a spherical-like structure similar to a sphere.

Furthermore, the thickness of the shell Li22 of the lithium-replenishing particle is greater than or equal to 30 nanometers and less than or equal to 200 nanometers. In this way, rupture of the shell Li22 due to that the shell Li22 is thin can be avoided during the formation stage or the charging and discharging stage of the energy storage apparatus 100, and external gas, moisture, and the like can be prevented from easily entering the shell Li22, which causes CO₂, moisture to react with the lithium-replenishing core Li21. It can also avoid the thick shell Li22 affecting the deintercalation of lithium ions in the lithium-replenishing core Li21 and the infiltration of the electrolyte into the lithium-replenishing core Li21. The problem that the mass proportion of lithium ions in the lithium-replenishing particles is relatively small due to the thick shell Li22 can also be avoided. Exemplarily, in combination with the above-mentioned method for producing the second lithium-containing compound Li2, the thickness of the shell Li22 can be ensured to be greater than or equal to 30 nanometers and less than or equal to 200 nanometers by adjusting the ratio of the precursor Fe source and the ratio of the organic carbon source. Exemplarily, the thickness of the shell Li22 is 30 nanometers, 50 nanometers, 100 nanometers, or 200 nanometers.

It may be noted that the thickness of the shell Li22 may vary in various regions. In this case, the minimum thickness and the maximum thickness of the shell Li22 may be used in combination for judgment, as long as the minimum thickness and maximum thickness are within the above range. Exemplarily, the minimum thickness of the shell Li22 is 45 nanometers and the maximum thickness is 180 nanometers.

In some embodiments, after the preparation of the second lithium-containing compound Li2 is completed, screening may be performed in combination with the particle sizes of the lithium-replenishing particles in the second lithium-containing compound Li2, so that the particle size distribution of the lithium-replenishing particles in the second lithium-containing compound Li2 satisfies (Dv99-Dv10)/Dv50 being less than or equal to 4, that is, the particle size distribution of the lithium-replenishing particles satisfies that a difference between the particle size when a cumulative volume distribution proportion is 99% and the particle size when the cumulative volume distribution proportion is 10% is less than or equal to 4 times the median particle size. In this way, the particle size distribution of the lithium-replenishing particles of the second lithium-containing compound Li2 can be ensured to be relatively uniform, thereby avoiding a large difference in the particle size of the lithium-replenishing particles, which lead to a concentrated distribution of lithium ions in the active material layer 212 caused by a large lithium-replenishing particle in a local area, and a poor lithium replenishment effect due to a small lithium-replenishing particle in a local area in the active material layer 212.

In the embodiments of the present application, in addition to the first lithium-containing compound Li1 and the second lithium-containing compound Li2, the active material layer 212 comprises at least a conductive agent, a binder and a solvent. The conductive agent may be at least one of conductive carbon black, conductive graphite, graphene, carbon nanotubes and carbon fibers. The binder may be at least one of styrenebutadiene rubber, polyvinylidene fluoride, polyvinyl alcohol, polyethylene acrylic acid, polyacrylate, polytetrafluoroethylene, etc. The solvent may be at least one of deionized water, N-methylpyrrolidone, etc.

Optionally, the mass ratio of the first lithium-containing compound Li1 to the second lithium-containing compound Li2 in the active material layer 212 may be 89~98.7: 0.3^{~}5, so as to ensure the content of the second lithium-containing compound Li2 in the active material layer 212, thereby ensuring the lithium replenishment effect on the energy storage apparatus 100. Exemplarily, the mass ratio of the first lithium-containing compound Li1 to the second lithium-containing compound Li2 is 89:0.3, 91:1.0, 92:2.0, 94:3.0, 96:4.0, 98.7:5.0, etc.

Furthermore, the mass ratio of the first lithium-containing compound Li1 to the second lithium-containing compound Li2 in the active material layer 212 may be 92~98.5: 0.3^{~}5 to ensure the content of the second lithium-containing compound Li2 in the active material layer 212, thereby ensuring the lithium replenishment effect on the energy storage apparatus 100 while avoiding lithium precipitation.

In some embodiments, the preparation of the active material layer 212 may be as follows: mixing the first lithium-containing compound Li1, the second lithium-containing compound Li2, the conductive agent and the binder according to a mass ratio of 92%~98.5%: 0.3%^{~}5%: 0.2%~2%: 1%~3% with high-speed stirring, then adding the solvent and carrying out a second stirring to obtain a positive electrode slurry with a solid content of 50%~70%; then coating the positive electrode slurry on one side surface of the current collector 211 in accordance with a single-sided coating density of 0.16 mg/mm²~0.26 mg/mm², which is then dried at a temperature of 90 degrees Celsius~110 degrees Celsius, and then performing compaction to obtain the active material layer 212 with a compaction density of 2.3~2.7 g/cm³.

In this way, through the above-mentioned preparation process, the uniform distribution of the second lithium-containing compound Li2 in the active material layer 212 and the lithium replenishment effect of the second lithium-containing compound Li2 are ensured, so as to avoid the phenomenon of lithium precipitation caused by excessive aggregation of lithium-replenishing materials or the phenomenon of poor lithium replenishment effect occurred due to the lithium replenishment being too sparse in local areas of the active material layer 212. The stirring speed during the two stirrings may both be greater than or equal to 1000 rpm. For example, the stirring speed may be 1000 rpm, 1500 rpm, 2000 rpm, or 2500 rpm. Alternatively, both stirring speeds may also be slightly less than 1000 rpm, for example, 900 rpm or 800 rpm, as long as the uniform distribution of the second lithium-containing compound Li2 in the active material layer 212 can be ensured.

The mass proportion of the second lithium-containing compound Li2 in the active material layer 212 is greater than or equal to 0.3% and less than or equal to 5%, so as to avoid that the lithium replenishment effect is affected by a small content of the second lithium-containing compound Li2 in the active material layer 212, and to avoid that the large content of the second lithium-containing compound Li2 in the active material layer 212 leads to excessive lithium replenishment and a local lithium precipitation, and it also avoid a situation where the mass proportion of the first lithium-containing compound Li1 in the active material layer 212 is small, which results in a decrease in energy density. Exemplarily, the mass proportion of the second lithium-containing compound Li2 in the active material layer 212 is 0.3%, 1.0%, 2%, 3%, or 5%.

In the present application, after completing the fabrication of the positive electrode sheet 21, the negative electrode sheet 22 and the separator 23 may be combined to fabricate the electrode assembly 20, which is then assembled with the housing 10 and the terminal cap unit 30 to obtain the energy storage apparatus 100. The assembled energy storage apparatus 100 commonly needs to be processed in the formation stage to form a good solid electrolyte interface film before it can be charged and discharged to provide power to the electrical device 400.

The above-mentioned method for preparing the second lithium-containing compound Li2 and the method for preparing the positive electrode sheet 21 may be combined to ensure the uniform distribution of the lithium-replenishing particles in the second lithium-containing compound Li2 in the active material layer 212 and the deintercalation energy of lithium ions of the lithium-replenishing particles, thereby ensuring the lithium replenishment effect of the lithium-replenishing particles, so as to improve the cycle life of the energy storage apparatus 100 during the charging and discharging stages.

Furthermore, in order to better improve the cycle life of the energy storage apparatus 100, with regard to the second lithium-containing compound Li2 comprised in the active material layer 212 on the positive electrode sheet 21, as shown in FIG. 5, it may be set that a connection area AA and a separation area BB are formed between the lithium-replenishing core Li21 and the shell Li22 of the lithium-replenishing particle in the second lithium-containing compound Li2, and in the cross section of the positive electrode sheet 21, a standard deviation of path length ratios of D lithium-replenishing particles is less than or equal to 0.18. D is an integer greater than or equal to 6. The path length ratio of the lithium-replenishing particle refers to a ratio of a path length of the shell Li22 of the lithium-replenishing particle in the connection area AA to a total circumference of the shell in the cross section of the positive electrode sheet 21.

In this way, it can be ensured that the lithium-replenishing particles in the active material layer 212 have connection areas AA with similar area sizes between the lithium-replenishing core Li21 and the shell Li22, so as to form electron transmission paths with similar area sizes, thereby ensuring that the lithium ion deintercalation abilities of the lithium-replenishing particles in the active material layer 212 are similar, to avoid that the lithium-replenishing particle in a local area of the active material layer 212 have better lithium ion deintercalation ability, which results in lithium precipitation due to excessive lithium replenishment, and to avoid the that lithium-replenishing particle in a local area have poor lithium ion deintercalation ability, which results in poor lithium replenishment effect and the appearance of purple spots on the negative electrode sheet 22. In this way, it is ensured that the entire active material layer is uniformly replenished with lithium, thereby improving the cycle life of the energy storage apparatus.

The path length of the shell Li22 in the connection area AA refers to the length of the cross-sectional contour of the shell Li22 in the connection area AA within the section of the positive electrode sheet 21, and the total circumference of the shell refers to the total length of the cross-sectional contour of the shell Li22 within the section surface of the positive electrode sheet 21. A plurality of connection areas AA may be formed between the lithium-replenishing core Li21 and the shell Li22. In this case, the path length of the shell Li22 in the connection area AA may be the sum of the lengths of the cross-sectional contours of the shell Li22 in the connection areas AA within the section of the positive electrode sheet 21. As shown in FIG. 5, in the cross section of the positive electrode sheet 21, a connection area AA and a separation area BB are formed between the lithium-replenishing core Li21 and the shell Li22, and the distance L3 between the lithium-replenishing core Li21 and the shell Li22 in the connection area AA is less than or equal to 5 nanometers, and the distance L4 between the lithium-replenishing core Li21 and the shell Li22 in the separation area BB is greater than 5 nanometers. As for the methods for determining the path length of the shell Li22 in the connection area AA and the total circumference of the shell, reference may be made to the method for determining the total length of the outer contour of the lithium-replenishing core Li21 within the cross section of the lithium-replenishing particle as described above. The difference is that the positive electrode sheet 21 is obtained by disassembling the energy storage apparatus 100. In this case, the positive electrode sheet 21 needs to be cleaned with an electrolyte solvent to remove the residual electrolyte on the positive electrode sheet 21.

It may be noted that the lithium-replenishing core Li21 and shell Li22 of the second lithium-containing compound Li2 may form a plurality of alternately distributed connection areas AA and separation areas BB, and FIG. 5 only exemplarily shows one connection area AA and adjacent one separation area BB.

In addition, in combination with the roundness of the lithium-replenishing core Li21 described above, the ratio of the total length of the outer contour of the lithium-replenishing core Li21 to the circumference of the smallest circumscribed circle of the outer contour may be limited to further control the ratio of the path length of the shell Li22 in the connection area AA to the total circumference of the shell, thereby further avoiding the situation where the lithium-replenishing particles forms fewer lithium ion transmission paths due to the small connection area AA, which results in poor lithium replenishment effect subsequently.

During the formation stage of the energy storage apparatus 100, the lithium-replenishing core Li21 comprised in the second lithium-containing compound Li2 will release lithium ions, thereby forming a connection area AA and a separation area BB between the lithium-replenishing core Li21 and the shell Li22 of the lithium-replenishing particle. The size of the connection area AA formed between the lithium-replenishing core Li21 and the shell Li22 is determined by the amount of lithium ions released by the lithium-replenishing core Li21 during the formation stage, and the size of the connection area AA determines the number of lithium-ion transmission paths formed by the lithium-replenishing core Li21, thereby determining to which extent the lithium replenishment is performed by the lithium-replenishing core Li21.

For the D lithium-replenishing particles on the cross section of the positive electrode sheet 21, on the one hand, the D lithium-replenishing particles are all lithium-replenishing particles in a rectangular area in the cross section of the positive electrode sheet 21, and the rectangular area may be a rectangular area of 22 micrometers × 15 micrometers. In this way, the standard deviation of the path length ratios is determined through all the lithium-replenishing particles in the rectangular area, so that when the standard deviation is less than or equal to 0.18, it better characterizes that the lithium ion deintercalation abilities of the lithium-replenishing particles in the rectangular area are close, thereby ensuring that the lithium ion deintercalation abilities of the lithium-replenishing particles in the active material layer 212 are close.

The rectangular area may be an area that may be observed when observing the cross section of the positive electrode sheet 21 under a microscope at 5K magnification. In addition to all lithium-replenishing particles in a rectangular area, the D lithium-replenishing particles may also be all lithium-replenishing particles in a circular area, or all lithium-replenishing particles in an elliptical area, which is not limited by the embodiments of the present application.

On the other hand, the D lithium-replenishing particles are all lithium-replenishing particles in multiple observation areas observed by the microscope within the cross section of the positive electrode sheet 21. The multiple observation areas may be areas observed at multiple positions arbitrarily selected in the cross section of the positive electrode sheet 21. In this way, the standard deviation of the path length ratios is determined by all lithium-replenishing particles in multiple arbitrarily selected observation areas, so that when the standard deviation is less than or equal to 0.18, it better characterizes that the lithium ion deintercalation abilities of the lithium-replenishing particles in the minimum area are close, thereby ensuring that the lithium ion deintercalation abilities of the lithium-replenishing particles in the active material layer 212 are close.

The observation area may be a rectangular area, a circular area, etc. Exemplarily, the observation area is a rectangular area of 16 micrometers × 23 micrometers.

Furthermore, if the degree of separation between the lithium-replenishing core Li21 and the shell Li22 is small, the lithium replenishment effect of the lithium-replenishing particles may be over-optimized, which may easily cause lithium precipitation. For this reason, when the connection area AA and the separation area BB are formed between the lithium-replenishing core Li21 and the shell Li22 of the lithium-replenishing particle, the maximum spacing between the lithium-replenishing core Li21 and the shell Li22 in the separation area BB may be set to be greater than or equal to 30 nanometers. In this way, the release amount of lithium ions of the lithium-replenishing core Li21 is ensured, thereby preventing the lithium-replenishing core Li21 from releasing too few lithium ions, which affects the lithium replenishment effect of the lithium-replenishing particle.

In the present application, the separation area BB and the connection area AA formed between the lithium-replenishing core Li21 and the shell Li22 of the lithium-replenishing particle, and the standard deviation of the path length ratios of D lithium-replenishing particles being less than or equal to 0.18, may be formed in the formation stage of the energy storage apparatus 100.

For example, it may be achieved by adjusting the maximum formation voltage. Optionally, the maximum formation voltage of the energy storage apparatus 100 may be set to be greater than or equal to 4 volts. Exemplarily, the maximum formation voltage is 4.0 volts, 4.2 volts, or 4.4 volts. Further, it may also be achieved by adjusting the formation duration of the energy storage apparatus 100. Optionally, the formation duration of the energy storage apparatus 100 may be set to be greater than or equal to 3 hours, so as to further ensure that the standard deviation of the path length ratios of D lithium-replenishing particles in the active material layer 212 on the positive electrode sheet 21 is less than or equal to 0.18, thereby ensuring the lithium replenishment effect of the lithium-replenishing particles. Exemplarily, the formation duration of the energy storage apparatus 100 in the formation stage is 3 hours, 3.2 hours, 3.5 hours, etc.

The cycle life of the energy storage apparatus 100 described above is explained below with reference to specific embodiments.

First embodiment: In combination with the above-mentioned method for preparing the second lithium-containing compound Li2, the second lithium-containing compound Li2 (LisFeO₄@Al₂O₃@C) is prepared, where the lithium-replenishing core Li21 of the lithium-replenishing particle is Li₅FeO₄, and the shell Li22 comprises an oxide coating layer of Al₂O₃ and a carbon coating layer. The minimum thickness of the shell Li22 is greater than 30 nanometers, the average thickness is 100 nanometers, and the carbon content in the second lithium-containing compound Li2 is 2 %. Afterwards, in combination with the above-mentioned method for preparing the positive electrode sheet 21, the first lithium-containing compound Li1 (lithium iron phosphate), the second lithium-containing compound Li2, the conductive agent (conductive carbon black), and the binder (polyvinylidene fluoride) are stirred and mixed at a high speed with a mass ratio of 92:3:2:3, and then the solvent (N-methylpyrrolidone) is added and stirred for a second time to obtain a positive electrode slurry with a solid content of 60%. The positive electrode slurry is then coated on one side surface of the current collector 211 in accordance with a single-sided coating density of 0.23 mg/mm², dried at a temperature of 110 degrees Celsius, and then compacted to obtain an active material layer 212 with a compaction density of 2.5g/cm³, thereby obtaining the positive electrode sheet 21. Then the negative electrode sheet 22 and the separator 23 may be combined to fabricate the electrode assembly 20, which is then assembled with the housing 10 and the terminal cap unit 30 to obtain the energy storage apparatus 100.

After the energy storage apparatus 100 is formed at a maximum formation voltage of 4.0 volts, it may be reached from the test conducted during the charging and discharging stage that the discharge capacity per gram of the energy storage apparatus 100 is 144.5 mAh/g when discharged at a rate of 0.5 with a voltage drop from 3.65V to 2.5V, and the cycle retention rate is 99.5% after 500 cycles of charging and discharging at a constant power of 0.5P. In addition, after disassembling the positive electrode sheet 21 of the energy storage apparatus 100, the standard deviation of the path length ratios of the shells Li22 of the lithium-replenishing particles in the active material layer 212 on the positive electrode sheet 21 in the connection areas AA is tested to be 0.12, the maximum separation distance between the lithium-replenishing core Li21 and the shell Li22 is 122 nanometers, (Dv99-Dv10)/Dv50 is 3.6, and the powder resistance of the positive electrode sheet 21 is 0.83 ohm/cm.

Second embodiment: In combination with the above-mentioned method for preparing the second lithium-containing compound Li2, the second lithium-containing compound Li2 (LisFeO₄@Al₂O₃@C) is prepared, where the lithium-replenishing core Li21 of the lithium-replenishing particle is Li₅FeO₄, and the shell Li22 comprises an oxide coating layer of Al₂O₃ and a carbon coating layer. The minimum thickness of the shell Li22 is greater than 30 nanometers, the average thickness is 100 nanometers, and the carbon content in the second lithium-containing compound Li2 is 1.5%. Afterwards, in combination with the above-mentioned method for preparing the positive electrode sheet 21, the first lithium-containing compound Li1 (lithium iron phosphate), the second lithium-containing compound Li2, the conductive agent (conductive carbon black), and the binder (polyvinylidene fluoride) are stirred and mixed at a high speed with a mass ratio of 92:3:2:3, and then the solvent (N-methylpyrrolidone) is added and stirred for a second time to obtain a positive electrode slurry with a solid content of 60%. The positive electrode slurry is then coated on one side surface of the current collector 211 in accordance with a single-sided coating density of 0.23 mg/mm², dried at a temperature of 110 degrees Celsius, and then compacted to obtain an active material layer 212 with a compaction density of 2.5g/cm³, thereby obtaining the positive electrode sheet 21. Then the negative electrode sheet 22 and the separator 23 are combined to fabricate the electrode assembly 20, which is then assembled with the housing 10 and the terminal cap unit 30 to obtain the energy storage apparatus 100.

After the energy storage apparatus 100 is formed at a maximum formation voltage of 4.0 volts, it may be reached from the test conducted during the charging and discharging stage that the discharge capacity per gram of the energy storage apparatus 100 is 144.3 mAh/g when discharged at a rate of 0.5 with a voltage drop from 3.65V to 2.5V, and the cycle retention rate is 99.5% after 500 cycles of charging and discharging at a constant power of 0.5P. In addition, after disassembling the positive electrode sheet 21 of the energy storage apparatus 100, the standard deviation of the path length ratios of the shells Li22 of the lithium-replenishing particles in the active material layer 212 on the positive electrode sheet 21 in the connection areas AA is tested to be 0.13, the maximum separation distance between the lithium-replenishing core Li21 and the shell Li22 is 120 nanometers, (Dv99-Dv10)/Dv50 is 3.6, and the powder resistance of the positive electrode sheet 21 is 0.86 ohm/cm.

Third embodiment: In combination with the above-mentioned method for preparing the second lithium-containing compound Li2, the second lithium-containing compound Li2 (LisFeO₄@Al₂O₃@C) is prepared, where the lithium-replenishing core Li21 of the lithium-replenishing particle is Li₅FeO₄, and the shell Li22 comprises an oxide coating layer of Al₂O₃ and a carbon coating layer. The minimum thickness of the shell Li22 is greater than 30 nanometers, the average thickness is 100 nanometers, and the carbon content in the second lithium-containing compound Li2 is 1.5 %. Afterwards, in combination with the above-mentioned method for preparing the positive electrode sheet 21, the first lithium-containing compound Li1 (lithium iron phosphate), the second lithium-containing compound Li2, the conductive agent (conductive carbon black), and the binder (polyvinylidene fluoride) are stirred and mixed at a high speed with a mass ratio of 92:3:2:3, and then the solvent (N-methylpyrrolidone) is added and stirred for a second time to obtain a positive electrode slurry with a solid content of 60%. The positive electrode slurry is then coated on one side surface of the current collector 211 in accordance with a single-sided coating density of 0.23 mg/mm², dried at a temperature of 110 degrees Celsius, and then compacted to obtain an active material layer 212 with a compaction density of 2.5g/cm³, thereby obtaining the positive electrode sheet 21. Then the negative electrode sheet 22 and the separator 23 may be combined to fabricate the electrode assembly 20, which is then assembled with the housing 10 and the terminal cap unit 30 to obtain the energy storage apparatus 100.

After the energy storage apparatus 100 is formed at a maximum formation voltage of 4.0 volts, it may be reached from the test conducted during the charging and discharging stage that the discharge capacity per gram of the energy storage apparatus 100 is 145.3 mAh/g when discharged at a rate of 0.5 with a voltage drop from 3.65V to 2.5V, and the cycle retention rate is 99.9% after 500 cycles of charging and discharging at a constant power of 0.5P. In addition, after disassembling the positive electrode sheet 21 of the energy storage apparatus 100, the standard deviation of the path length ratios of the shells Li22 of the lithium-replenishing particles in the active material layer 212 on the positive electrode sheet 21 in the connection areas AA is tested to be 0.09, the maximum separation distance between the lithium-replenishing core Li21 and the shell Li22 is 122 nanometers, (Dv99-Dv10)/Dv50 is 2.2, and the powder resistance of the positive electrode sheet 21 is 0.85 ohm/cm.

Fourth embodiment: In combination with the above-mentioned method for preparing the second lithium-containing compound Li2, the second lithium-containing compound Li2 (LisFeO₄@Al₂O₃@C) is prepared, where the lithium-replenishing core Li21 of the lithium-replenishing particle is Li₅FeO₄, and the shell Li22 comprises an oxide coating layer of Al₂O₃ and a carbon coating layer. The minimum thickness of the shell Li22 is greater than 30 nanometers, the average thickness is 100 nanometers, and the carbon content in the second lithium-containing compound Li2 is 1.5%. Afterwards, in combination with the above-mentioned method for preparing the positive electrode sheet 21, the first lithium-containing compound Li1 (lithium iron phosphate), the second lithium-containing compound Li2, the conductive agent (conductive carbon black), and the binder (polyvinylidene fluoride) are stirred and mixed at a high speed with a mass ratio of 92:3:2:3, and then the solvent (N-methylpyrrolidone) is added and stirred for a second time to obtain a positive electrode slurry with a solid content of 60%. The positive electrode slurry is then coated on one side surface of the current collector 211 in accordance with a single-sided coating density of 0.23 mg/mm², dried at a temperature of 110 degrees Celsius, and then compacted to obtain an active material layer 212 with a compaction density of 2.5g/cm³, thereby obtaining the positive electrode sheet 21. Then the negative electrode sheet 22 and the separator 23 may be combined to fabricate the electrode assembly 20, which is then assembled with the housing 10 and the terminal cap unit 30 to obtain the energy storage apparatus 100.

After the energy storage apparatus 100 is formed at a maximum formation voltage of 4.1 volts, it may be reached from the test conducted during the charging and discharging stage that the discharge capacity per gram of the energy storage apparatus 100 is 145.8 mAh/g when discharged at a rate of 0.5 with a voltage drop from 3.65V to 2.5V, and the cycle retention rate is 100.1% after 500 cycles of charging and discharging at a constant power of 0.5P. In addition, after disassembling the positive electrode sheet 21 of the energy storage apparatus 100, the standard deviation of the path length ratios of the shells Li22 of the lithium-replenishing particles in the active material layer 212 on the positive electrode sheet 21 in the connection areas AA is tested to be 0.07, the maximum separation distance between the lithium-replenishing core Li21 and the shell Li22 is 138 nanometers, (Dv99-Dv10)/Dv50 is 3.6, and the powder resistance of the positive electrode sheet 21 is 0.85 ohm/cm.

Fifth embodiment: In combination with the above-mentioned method for preparing the second lithium-containing compound Li2, the second lithium-containing compound Li2 (Li₆CoO₄@Al₂O₃@C) is prepared, where the lithium-replenishing core Li21 of the lithium-replenishing particle is Li₆CoO₄, and the shell Li22 comprises an oxide coating layer of Al₂O₃ and a carbon coating layer. The minimum thickness of the shell Li22 is greater than 30 nanometers, the average thickness is 100 nanometers, and the carbon content in the second lithium-containing compound Li2 is 1.5%. Afterwards, with reference to the above-mentioned method for preparing the positive electrode sheet 21, the first lithium-containing compound Li1 (lithium iron phosphate), the second lithium-containing compound Li2, the conductive agent (conductive carbon black), and the binder (polyvinylidene fluoride) are stirred and mixed at a high speed with a mass ratio of 92:3:2:3, and then the solvent (N-methylpyrrolidone) is added and stirred for a second time to obtain a positive electrode slurry with a solid content of 60%. The positive electrode slurry is then coated on one side surface of the current collector 211 in accordance with a single-sided coating density of 0.23 mg/mm², dried at a temperature of 110 degrees Celsius, and then compacted to obtain an active material layer 212 with a compaction density of 2.5g/cm³, thereby obtaining the positive electrode sheet 21. Then the negative electrode sheet 22 and the separator 23 may be combined to fabricate the electrode assembly 20, which is then assembled with the housing 10 and the terminal cap unit 30 to obtain the energy storage apparatus 100.

After the energy storage apparatus 100 is formed at a maximum formation voltage of 4.0 volts, it may be reached from the test conducted during the charging and discharging stage that the discharge capacity per gram of the energy storage apparatus 100 is 145.8 mAh/g when discharged at a rate of 0.5 with a voltage drop from 3.65V to 2.5V, and the cycle retention rate is 100.5% after 500 cycles of charging and discharging at a constant power of 0.5P. In addition, after disassembling the positive electrode sheet 21 of the energy storage apparatus 100, the standard deviation of the path length ratios of the shells Li22 of the lithium-replenishing particles in the active material layer 212 on the positive electrode sheet 21 in the connection areas AA is tested to be 0.08, the maximum separation distance between the lithium-replenishing core Li21 and the shell Li22 is 121 nanometers, (Dv99-Dv10)/Dv50 is 3.6, and the powder resistance of the positive electrode sheet 21 is 0.87 ohm/cm.

Sixth embodiment: In combination with the above-mentioned method for preparing the second lithium-containing compound Li2, the second lithium-containing compound Li2 (Li₅FeO₄@AlF₃@C) is prepared, where the lithium-replenishing core Li21 of the lithium-replenishing particle is Li₅FeO₄, and the shell Li22 comprises an oxide coating layer of AlF₃ and a carbon coating layer. The minimum thickness of the shell Li22 is greater than 30 nanometers, the average thickness is 100 nanometers, and the carbon content in the second lithium-containing compound Li2 is 1.5%. Afterwards, in combination with the above-mentioned method for preparing the positive electrode sheet 21, the first lithium-containing compound Li1 (lithium iron phosphate), the second lithium-containing compound Li2, the conductive agent (conductive carbon black), and the binder (polyvinylidene fluoride) are stirred and mixed at a high speed with a mass ratio of 92:3:2:3, and then the solvent (N-methylpyrrolidone) is added and stirred for a second time to obtain a positive electrode slurry with a solid content of 60%. The positive electrode slurry is then coated on one side surface of the current collector 211 in accordance with a single-sided coating density of 0.23 mg/mm², dried at a temperature of 110 degrees Celsius, and then compacted to obtain an active material layer 212 with a compaction density of 2.5g/cm³, thereby obtaining the positive electrode sheet 21. Then the negative electrode sheet 22 and the separator 23 may be combined to fabricate the electrode assembly 20, which is then assembled with the housing 10 and the terminal cap unit 30 to obtain the energy storage apparatus 100.

After the energy storage apparatus 100 is formed at a maximum formation voltage of 4.0 volts, it may be reached from the test conducted during the charging and discharging stage that the discharge capacity per gram of the energy storage apparatus 100 is 145.3 mAh/g when discharged at a rate of 0.5 with a voltage drop from 3.65V to 2.5V, and the cycle retention rate is 99.8% after 500 cycles of charging and discharging at a constant power of 0.5P. In addition, after disassembling the positive electrode sheet 21 of the energy storage apparatus 100, the standard deviation of the path length ratios of the shells Li22 of the lithium-replenishing particles in the active material layer 212 on the positive electrode sheet 21 in the connection areas AA is tested to be 0.1, the maximum separation distance between the lithium-replenishing core Li21 and the shell Li22 is 118 nanometers, (Dv99-Dv10)/Dv50 is 3.6, and the powder resistance of the positive electrode sheet 21 is 0.90 ohm/cm.

Seventh embodiment: Compared with the third embodiment, the difference is that the first lithium-containing compound Li1 (lithium iron phosphate), the second lithium-containing compound Li2, the conductive agent (conductive carbon black), and the binder (polyvinylidene fluoride) are in a mass ratio of 94: 1: 2: 3. After the energy storage apparatus 100 is formed at a maximum formation voltage of 4.0 volts, it may be reached from the test conducted during the charging and discharging stage that the discharge capacity per gram of the energy storage apparatus 100 is 144.1 mAh/g when discharged at a rate of 0.5 with a voltage drop from 3.65V to 2.5V, and the cycle retention rate is 98.1% after 500 cycles of charging and discharging at a constant power of 0.5P. In addition, after disassembling the positive electrode sheet 21 of the energy storage apparatus 100, the standard deviation of the path length ratios of the shell Li22 of the lithium-replenishing particles in the active material layer 212 on the positive electrode sheet 21 in the connection areas AA is tested to be 0.1, the maximum separation distance between the lithium-replenishing core Li21 and the shell Li22 is 125 nanometers, (Dv99-Dv10)/Dv50 is 3.6, and the powder resistance of the positive electrode sheet 21 is 0.90 ohm/cm.

Eighth embodiment: Compared with the third embodiment, the difference is that the first lithium-containing compound Li1 (lithium iron phosphate), the second lithium-containing compound Li2, the conductive agent (conductive carbon black), and the binder (polyvinylidene fluoride) are in a mass ratio of 90: 5: 2: 3. After the energy storage apparatus 100 is formed at a maximum formation voltage of 4.0 volts, it may be reached from the test conducted during the charging and discharging stage that the discharge capacity per gram of the energy storage apparatus 100 is 147.3 mAh/g when discharged at a rate of 0.5 with a voltage drop from 3.65V to 2.5V, and the cycle retention rate is 101.5% after 500 cycles of charging and discharging at a constant power of 0.5P. In addition, after disassembling the positive electrode sheet 21 of the energy storage apparatus 100, the standard deviation of the path length ratios of the shells Li22 of the lithium-replenishing particles in the active material layer 212 on the positive electrode sheet 21 in the connection areas AA is tested to be 0.1, the maximum separation distance between the lithium-replenishing core Li21 and the shell Li22 is 125 nanometers, (Dv99-Dv10)/Dv50 is 3.6, and the powder resistance of the positive electrode sheet 21 is 0.90 ohm/cm.

It may be noted that, compared with the above-mentioned third embodiment, although the mass ratio of the first lithium-containing compound Li1 (lithium iron phosphate), the second lithium-containing compound Li2, the conductive agent (conductive carbon black), and the binder (polyvinylidene fluoride) is adjusted in the above-mentioned seventh and eighth embodiments, theoretically, after disassembling the positive electrode sheet 21 of the energy storage apparatus 100, parameters such as the standard deviation of the path length ratios of the shells Li22 of the lithium-replenishing particles in the active material layer 212 in the connection areas AA, the maximum separation distance between the lithium-replenishing core Li21 and the shell Li22, etc., will not change. However, during the actual test process, due to interference from external factors, etc., the relevant parameters of the seventh and eighth embodiments deviate from the relevant parameters of the third embodiment.

First comparative example: In combination with the above-mentioned method for preparing the second lithium-containing compound Li2, the second lithium-containing compound Li2 (LisFeO₄@Al₂O₃@C) is prepared, where the lithium-replenishing core Li21 of the lithium-replenishing particle is Li₅FeO₄, and the shell Li22 comprises an oxide coating layer of Al₂O₃ and a carbon coating layer. The minimum thickness of the shell Li22 is 100 nanometers, and the carbon content in the second lithium-containing compound Li2 is 0.4%. Afterwards, in combination with the above-mentioned method for preparing the positive electrode sheet 21, the first lithium-containing compound Li1 (lithium iron phosphate), the second lithium-containing compound Li2, the conductive agent (conductive carbon black), and the binder (polyvinylidene fluoride) are stirred and mixed at a high speed with a mass ratio of 92:3:2:3, and then the solvent (N-methylpyrrolidone) is added and stirred for a second time to obtain a positive electrode slurry with a solid content of 60%. The positive electrode slurry is then coated on one side surface of the current collector 211 in accordance with a single-sided coating density of 0.23 mg/mm², dried at a temperature of 110 degrees Celsius, and then compacted to obtain an active material layer 212 with a compaction density of 2.5g/cm³, thereby obtaining the positive electrode sheet 21. Then the negative electrode sheet 22 and the separator 23 may be combined to fabricate the electrode assembly 20, which is then assembled with the housing 10 and the terminal cap unit 30 to obtain the energy storage apparatus 100.

After the energy storage apparatus 100 is formed at a maximum formation voltage of 3.9 volts, it may be reached from the test conducted during the charging and discharging stage that the discharge capacity per gram of the energy storage apparatus 100 is 142.7 mAh/g when discharged at a rate of 0.5 with a voltage drop from 3.65V to 2.5V, and the cycle retention rate is 96.3% after 500 cycles of charging and discharging at a constant power of 0.5P. In addition, after disassembling the positive electrode sheet 21 of the energy storage apparatus 100, the standard deviation of the path length ratios of the shells Li22 of the lithium-replenishing particles in the active material layer 212 on the positive electrode sheet 21 in the connection areas AA is tested to be 0.22, the maximum separation distance between the lithium-replenishing core Li21 and the shell Li22 is 122 nanometers, (Dv99-Dv10)/Dv50 is 2.2, and the powder resistance of the positive electrode sheet 21 is 0.98 ohm/cm.

Second comparative example: In combination with the above-mentioned method for preparing the second lithium-containing compound Li2, the second lithium-containing compound Li2 (LisFeO₄@Al₂O₃@C) is prepared, where the lithium-replenishing core Li21 of the lithium-replenishing particle is Li₅FeO₄, and the shell Li22 comprises an oxide coating layer of Al₂O₃ and a carbon coating layer. The minimum thickness of the shell Li22 is greater than 30 nanometers, the average thickness is 70 nanometers, and the carbon content in the second lithium-containing compound Li2 is 0.4%. Afterwards, in combination with the above-mentioned method for preparing the positive electrode sheet 21, the first lithium-containing compound Li1 (lithium iron phosphate), the second lithium-containing compound Li2, the conductive agent (conductive carbon black), and the binder (polyvinylidene fluoride) are stirred and mixed at a high speed with a mass ratio of 92:3:2:3, and then the solvent (N-methylpyrrolidone) is added and stirred for a second time to obtain a positive electrode slurry with a solid content of 60%. The positive electrode slurry is then coated on one side surface of the current collector 211 in accordance with a single-sided coating density of 0.23 mg/mm², dried at a temperature of 110 degrees Celsius, and then compacted to obtain an active material layer 212 with a compaction density of 2.5g/cm³, thereby obtaining the positive electrode sheet 21. Then the negative electrode sheet 22 and the separator 23 may be combined to fabricate the electrode assembly 20, which is then assembled with the housing 10 and the terminal cap unit 30 to obtain the energy storage apparatus 100.

After the energy storage apparatus 100 is formed at a maximum formation voltage of 3.8 volts, it may be reached from the test conducted during the charging and discharging stage that the discharge capacity per gram of the energy storage apparatus 100 is 143.2 mAh/g when discharged at a rate of 0.5 with a voltage drop from 3.65V to 2.5V, and the cycle retention rate is 97.1% after 500 cycles of charging and discharging at a constant power of 0.5P. In addition, after disassembling the positive electrode sheet 21 of the energy storage apparatus 100, the standard deviation of the path length ratios of the shells Li22 of the lithium-replenishing particles in the active material layer 212 on the positive electrode sheet 21 in the connection areas AA is tested to be 0.19, the maximum separation distance between the lithium-replenishing core Li21 and the shell Li22 is 55 nanometers, (Dv99-Dv10)/Dv50 is 3.5, and the powder resistance of the positive electrode sheet 21 is 0.98 ohm/cm.

Third comparative example: In combination with the above-mentioned method for preparing the second lithium-containing compound Li2, the second lithium-containing compound Li2 (LisFeO₄@Al₂O₃@C) is prepared, where the lithium-replenishing core Li21 of the lithium-replenishing particle is Li₅FeO₄, and the shell Li22 comprises an oxide coating layer of Al₂O₃ and a carbon coating layer. The minimum thickness of the shell Li22 is greater than 30 nanometers, the average thickness is 100 nanometers, and the carbon content in the second lithium-containing compound Li2 is 1.5%. Afterwards, in combination with the above-mentioned method for preparing the positive electrode sheet 21, the first lithium-containing compound Li1 (lithium iron phosphate), the second lithium-containing compound Li2, the conductive agent (conductive carbon black), and the binder (polyvinylidene fluoride) are stirred and mixed at a high speed with a mass ratio of 92:3:2:3, and then the solvent (N-methylpyrrolidone) is added and stirred for a second time to obtain a positive electrode slurry with a solid content of 60%. The positive electrode slurry is then coated on one side surface of the current collector 211 in accordance with a single-sided coating density of 0.23 mg/mm², dried at a temperature of 110 degrees Celsius, and then compacted to obtain an active material layer 212 with a compaction density of 2.5g/cm³, thereby obtaining the positive electrode sheet 21. Then the negative electrode sheet 22 and the separator 23 may be combined to fabricate the electrode assembly 20, which is then assembled with the housing 10 and the terminal cap unit 30 to obtain the energy storage apparatus 100.

After the energy storage apparatus 100 is formed at a maximum formation voltage of 3.8 volts, it may be reached from the test conducted during the charging and discharging stage that the discharge capacity per gram of the energy storage apparatus 100 is 141.7 mAh/g when discharged at a rate of 0.5 with a voltage drop from 3.65V to 2.5V, and the cycle retention rate is 95.7% after 500 cycles of charging and discharging at a constant power of 0.5P. In addition, after disassembling the positive electrode sheet 21 of the energy storage apparatus 100, the standard deviation of the path length ratios of the shells Li22 of the lithium-replenishing particles in the active material layer 212 on the positive electrode sheet 21 in the connection areas AA is tested to be 0.15, the maximum separation distance between the lithium-replenishing core Li21 and the shell Li22 is 37 nanometers, (Dv99-Dv10)/Dv50 is 3.5, and the powder resistance of the positive electrode sheet 21 is 0.91 ohm/cm.

For the energy storage apparatuses 100 respectively comprising the above-mentioned first to eighth embodiments and first to third comparative examples, the performance parameters of the energy storage apparatuses 100 are shown in the following table.

| | Standard deviation of path length ratios | Maximu m separatio n distance (nm) | Carbon content in the second lithium-containing compound | Maximu m formatio n voltage (volts) | Discharg e capacity per gram (mAh/g) | Cycle retention rate | Lithium precipitation |
|---|---|---|---|---|---|---|---|
| First embodimen t | 0.12 | 122 | 2% | 4.0 | 144.5 | 99.5% | No lithium precipitatio n |
| Second embodimen t | 0.13 | 120 | 1.5% | 4.0 | 144.3 | 99.5% | No lithium precipitatio n |
| Third embodimen t | 0.09 | 122 | 1.5% | 4.0 | 145.3 | 99.9 % | No lithium precipitatio n |
| Fourth embodimen t | 0.07 | 138 | 1.5% | 4.1 | 145.8 | 100.1% | No lithium precipitatio n |
| Fifth embodimen t | 0.08 | 121 | 1.5% | 4.0 | 145.8 | 100.5% | No lithium precipitatio n |
| Sixth embodimen t | 0.10 | 118 | 1.5% | 4.0 | 145.3 | 99.8% | No lithium precipitatio n |
| Seventh embodimen t | 0.10 | 125 | 1.5% | 4.0 | 144. 1 | 98.1% | No lithium precipitatio n |
| Eighth embodimen t | 0.10 | 121 | 1.5% | 4.0 | 147.3 | 101.5% | Slight lithium precipitatio n |
| First comparativ e example | 0.22 | 35 | 0.4% | 3.9 | 142.7 | 96.3 | Slight lithium precipitatio n |
| Second comparativ e example | 0.19 | 55 | 0.4% | 3.8 | 143.2 | 97.1% | Slight lithium precipitatio n |
| Third comparativ e example | 0.15 | 37 | 1.5% | 3.8 | 141.7 | 95.7% | No lithium precipitatio n |

For the confirmation of the lithium replenishment effect of each of the above energy storage apparatuses 100, it may be confirmed by whether purple spots appear on the disassembled negative electrode sheet 22. For the confirmation of whether lithium precipitation occurs: the energy storage apparatus 100 is charged from the initial temperature T0 (for example, -20 degrees Celsius) at a charging rate of 0.3 ~5 until the temperature rises byΔT (greater than or equal to 5 degrees Celsius) to bring the temperature to a target temperature T1; then the energy storage apparatus 100 is charged at a charging rate of 0.5~5 from the target temperature T1 to reach 80% of the electric capacity, and each energy storage apparatus 100 that has been charged to 80% of the electric capacity is then disassembled to observe whether there is lithium precipitation on the negative electrode sheet. It may comprise: 1. no lithium precipitation, i.e., there is no lithium precipitation area on the entire negative electrode sheet; 2. slight lithium precipitation, i.e., the maximum area of a single lithium precipitation area on the entire negative electrode sheet ≤ 5×5 square millimeters, and the number of lithium precipitation area on the entire negative electrode sheet -,< 1; 3. moderate lithium precipitation, i.e., 5×5 square millimeters < the maximum area of a single lithium precipitation area on the entire negative electrode sheet ≤ 10×10 square millimeters, and the number of lithium precipitation area on the entire negative electrode sheet ≤ 1; 4. severe lithium precipitation, i.e., lithium precipitation exists and the determination conditions for slight lithium precipitation and moderate lithium precipitation are not met.

An embodiment of the present application further provides a method for determining uniform lithium replenishment, which is used for determining the uniformity of lithium replenishment of an energy storage apparatus to ensure the cycle life of the energy storage apparatus. The method comprises the following steps 1 to 6.

In step 1, an energy storage apparatus after formation is disassembled to obtain a positive electrode sheet, where the positive electrode sheet comprises an active material layer, the active material layer comprises a second lithium-containing compound, and the second lithium-containing compound is a lithium-replenishing particle, where the lithium-replenishing particle comprises a lithium-replenishing core and a shell covering the lithium-replenishing core.

In step 2, the positive electrode sheet is cut, and an electron micrograph corresponding to at least one observation area in a cross section of the positive electrode sheet is obtained, respectively.

In step 3, a connection area and a separation area of each of D lithium-replenishing particles in the at least one electron micrograph are determined, where D is an integer greater than or equal to 6, a distance between the lithium-replenishing core and the shell in the connection area is less than or equal to 5 nanometers, and a distance between the lithium-replenishing core and the shell in the separation area is greater than 5 nanometers.

In step 4, a ratio of a path length of the shell of each lithium-replenishing particle in the connection area to a total circumference of the shell is determined, and a path length ratio of each lithium-replenishing particle of the D lithium-replenishing particles is obtained.

In step 5, a standard deviation of the path length ratios of the D lithium-replenishing particles is determined according to the D path length ratios.

In step 6, when the standard deviation of the path length ratios of the D lithium-replenishing particles is less than or equal to 0.18, it is determined that the energy storage apparatus is replenished with lithium uniformly.

In the embodiment of the present application, the lithium replenishment effect of the second lithium-containing compound comprised in the positive electrode sheet of the energy storage apparatus can be determined by the above method, so as to effectively ensure the uniformity of the lithium replenishment provided by the lithium-replenishing particles on the positive electrode sheet, thereby effectively improving the cycle life of the energy storage apparatus.

The energy storage apparatus described above may be an energy storage apparatus obtained according to the preparation method described in the above embodiments, and the parameters such as the formation voltage, formation duration, and particle size of the second lithium-containing compound on the positive electrode sheet, etc., of the energy storage apparatus may all refer to the description of the above embodiments, which is not limited by the embodiments of the present application.

The positive electrode sheet obtained by disassembling in step 1 may be first soaked and cleaned to remove the electrolyte on the surface of the positive electrode sheet, and then step 2 is performed. In step 2, the relevant parameters of the microscope when obtaining the electron micrograph may refer to the above-mentioned embodiments. In step 3, the connection area and separation area of the lithium-replenishing particle may be determined in combination with the distance between the lithium-replenishing core and the shell described in the above-mentioned embodiments. In step 4, the ratio of the path length radio of the shell of the lithium-replenishing particle in the connection area to the total circumference of the shell may be determined by referring to the method described in the above-mentioned embodiments, which will not be repeated in the embodiment of the present application.

An embodiment of the present application further provides an electrical device 400. The electrical device 400 may be an energy storage device, a vehicle, a container-type energy storage device, etc. As shown in FIG. 6, the electrical device 400 comprises the energy storage apparatus 100 described in the above embodiments, and the energy storage apparatus 100 supplies power to the electrical device 400. In this way, in combination with the energy storage apparatus 100 described above, during the use of the electrical device 400, it facilitates the improvement of the working stability of the electrical device 400 and extends the working time of the electrical device 400.

In the embodiments of the present application, the terms "first", "second", "third", etc. are used for descriptive purposes only and are not to be understood as indicating or implying the relative importance. Unless otherwise expressly limited, "a plurality of" or "multiple" means two or more. Terms such as "installed", " linked", "connected", and "fixed" may all be understood in a broad sense. For example, the term "connected" may be a fixed connection, a detachable connection, or an integral connection. The term "linked" may be a direct connection or an indirect connection through an intermediate medium. For those of ordinary skill in the art, the specific meanings of the above terms in the embodiments of the present application may be understood according to the specific circumstances.

In the description of the embodiments of the present application, it may be understood that the orientations or positional relationships indicated by the terms "on", "below", "left", "right", "front", "back", etc., are orientations or positional relationships shown based on the accompanying drawings. These terms are used only to facilitate the description of the embodiments of the present application and to simplify the description, rather than indicating or implying that the apparatus or unit referred to must be located at a specific direction, or be constructed and operated in a specific orientation, thus cannot be construed as a limitation on the embodiments of the present application.

In the description of the specification, the description of the terms "one embodiment", "some embodiments", "specific embodiment", etc. means that the specific features, structures, materials or characteristics described in combination with the embodiment or example are included in at least one embodiment or example of the implementations of the present application. In this specification, the schematic representation of the above terms does not necessarily refer to the same embodiment or example. Moreover, the specific features, structures, materials or characteristics described may be combined in any one or more embodiments or examples in a suitable manner.

The above are only preferred embodiments of the implementations of the present application, and are not intended to limit the implementations of the present application. For those skilled in the art, the implementations of the present application may have various changes and variations.

## Claims

1. An energy storage apparatus (100), comprising:
an electrode assembly (20), comprising a positive electrode sheet (21), a negative electrode sheet (22) and a separator (23) arranged in a stacked manner;
wherein the positive electrode sheet (21) comprises a current collector (211) and an active material layer (212) located on a surface of the current collector (211), the active material layer (212) comprises a first lithium-containing compound (Li1) in granular form and a second lithium-containing compound (Li2) in granular form, the first lithium-containing compound (Li1) is a positive electrode active material, the second lithium-containing compound (Li2) is a lithium-replenishing particle, the lithium-replenishing particle comprises a lithium-replenishing core (Li21) and a shell (Li22) covering the lithium-replenishing core (Li21);
wherein a connection area (AA) and a separation area (BB) are formed between the lithium-replenishing core (Li21) and the shell (Li22), a distance between the lithium-replenishing core (Li21) and the shell (Li22) in the connection area (AA) is less than or equal to 5 nanometers, a distance between the lithium-replenishing core (Li21) and the shell (Li22) in the separation area (BB) is greater than 5 nanometers, and a standard deviation of path length ratios of D lithium-replenishing particles is less than or equal to 0.18;
wherein the D is a number of the lithium-replenishing particle and an integer greater than or equal to 6, and the path length ratio of the lithium-replenishing particle refers to a ratio of a path length of the shell (Li22) of the lithium-replenishing particle in the connection area (AA) to a total circumference of the shell in a cross section of the positive electrode sheet (21).

2. The energy storage apparatus (100) according to claim 1, wherein a maximum distance between the lithium-replenishing core (Li21) and the shell (Li22) in the separation area (BB) is greater than or equal to 30 nanometers.

3. The energy storage apparatus (100) according to claim 1, wherein a maximum formation voltage of the energy storage apparatus (100) is greater than or equal to 4 volts.

4. The energy storage apparatus (100) according to claim 1, wherein a thickness of the shell (Li22) is greater than or equal to 30 nanometers and less than or equal to 200 nanometers.

5. The energy storage apparatus (100) according to any one of claims 1 to 4, wherein the D lithium-replenishing particles are all lithium-replenishing particles in a rectangular area of 22 micrometers × 15 micrometers.

6. The energy storage apparatus (100) according to any one of claims 1 to 4, wherein the D lithium-replenishing particles are all lithium-replenishing particles within a plurality of observation areas observed by a microscope in the cross section of the positive electrode sheet (21).

7. The energy storage apparatus (100) according to any one of claims 1 to 4, wherein a median particle size of the lithium-replenishing core (Li21) is greater than or equal to 3 micrometers and less than or equal to 10 micrometers.

8. The energy storage apparatus (100) according to claim 7, wherein the shell (Li22) comprises a coating layer of material MₓO_{y}, wherein M comprises at least one of elements Fe, Co, Ni, Ti, Zn, Mg, Al, Mn, V, Cr, Zr, Cu, Nb, Ta, W, Zr, Y and La, and 1≤x≤3, 1≤y≤5.

9. The energy storage apparatus (100) according to any one of claims 1 to 4, wherein a particle size distribution of the lithium-replenishing particles in the second lithium-containing compound (Li2) satisfies that a difference between a particle size when a cumulative volume distribution proportion is 99% and a particle size when a cumulative volume distribution proportion is 10% is less than or equal to 4 times a median particle size.

10. The energy storage apparatus (100) according to any one of claims 1 to 4, wherein the lithium-replenishing core (Li21) is Li₁₊ᵣ M₁₋ₚNₚO₄₋ₛB₅, wherein 0.1<r<6.1, 0≤p<0.99, 0≤s<0.1, M and N each comprise at least one of elements Fe, Co, Ni, Ti, Zn, Mg, Al, Mn, V, Cr, Zr, Cu, Nb, Ta, W, Zr, Y, and La, and B comprises at least one of elements S, N, F, Cl, and Br.

11. A method for determining uniform lithium replenishment, wherein the method comprises:
step 1: disassembling an energy storage apparatus after formation to obtain a positive electrode sheet, wherein the positive electrode sheet comprises an active material layer, the active material layer comprises a second lithium-containing compound, the second lithium-containing compound is lithium-replenishing particles, and the lithium-replenishing particle comprises a lithium-replenishing core and a shell covering the lithium-replenishing core;
step 2: cutting the positive electrode sheet, and obtaining at least an electron micrograph corresponding to at least an observation area in a cross section of the positive electrode sheet, respectively;
step 3: determining a connection area (AA) and a separation area (BB) of each of D lithium-replenishing particles in the at least one electron micrograph, wherein D is a number of the lithium-replenishing particle and is an integer greater than or equal to 6, a distance between the lithium-replenishing core and the shell in the connection area (AA) is less than or equal to 5 nanometers, and a distance between the lithium-replenishing core and the shell in the separation area (BB) is greater than 5 nanometers;
step 4: determining a ratio of a path length of the shell of each lithium-replenishing particle in the connection area (AA) to a total circumference of the shell, to obtain a path length ratio of each lithium-replenishing particle in the D lithium-replenishing particles;
step 5: determining a standard deviation of the path length ratios of the D lithium-replenishing particles according to D path length ratios; and
step 6: in response to the standard deviation of the path length ratios of the D lithium-replenishing particles being less than or equal to 0.18, determining that the energy storage apparatus is replenished with lithium uniformly.

12. An electrical device (400), wherein the electrical device (400) comprises an energy storage apparatus (100) according to any one of claims 1 to 10, and the energy storage apparatus (100) supplies power to the electrical device (400).
